# EUROPÄISCHE PATENTSCHRIFT

(11) **EP 4 373 873 B1**
(45) Veröffentlichungstag und Bekanntmachung des Hinweises auf die Patenterteilung: **19.11.2025**
(21) Anmeldenummer: 22750820.7
(22) Anmeldetag: 14.07.2022
(51) Int. Cl.: C08G 65/26, C08G 18/50, C08G 18/48, C08G 18/40, C08G 18/42, C08G 18/09, C08G 18/16, C08G 18/18, C08G 18/22, C08G 18/76

(54) **POLYURETHANHARTSCHAUMSTOFFE AUF BASIS VON FETTSÄUREMODIFIZIERTEN POLYETHERPOLYOLEN UND VERNETZENDEN POLYESTERPOLYOLEN**
POLYURETHANE FOAMS BASED ON FATTY ACID-MODIFIED POLYETHER POLYOLS AND CROSSLINKING POLYESTER POLYOLS
MOUSSES RIGIDES DE POLYURÉTHANE À BASE DE POLYÉTHERPOLYOLS MODIFIÉS PAR ACIDE GRAS ET DE POLYESTERPOLYOLS RÉTICULÉS

(30) Priorität: 21.07.2021 EP 21186950
(43) Veröffentlichungstag der Anmeldung: 29.05.2024
(73) Patentinhaber: BASF SE, 67056 Ludwigshafen am Rhein (DE)
(72) Erfinder: KALUSCHKE, Tobias, 49448 Lemfoerde (DE); JACOBMEIER, Olaf, 49448 Lemfoerde (DE); KOCH, Sebastian, 49448 Lemfoerde (DE)
(74) Vertreter: BASF IP Association
(86) Internationale Anmeldenummer: PCT/EP2022/069758
(87) Internationale Veröffentlichungsnummer: WO 2023/001687

(56) Entgegenhaltungen:
- EP-A1- 2 634 201
- WO-A1-2011/131682
- WO-A1-2014/048777
- WO-A1-2018/202567

## Beschreibung

Die vorliegende Erfindung betrifft ein Verfahren zur Herstellung von Polyurethan-Hartschaumstoffen, bei dem man (a) Polyisocyanate mit (b) Verbindungen mit mindestens zwei mit Isocyanatgruppen reaktiven Wasserstoff-atomen, (c) gegebenenfalls Flammschutzmittel (d) Treibmittel, (e) Katalysator und (f) gegebenenfalls Hilfs- und Zusatzstoffe zu einer Reaktionsmischung vermischt und zum Polyurethan-Hartschaumstoff aushärtet, wobei die Komponente (b) mindestens ein Polyetherpolyol (b1), hergestellt durch Umsetzung von 15 bis 40 Gew.-%, bezogen auf das Gesamtgewicht des Polyetherpolyols (b1), eines oder mehrerer Polyole oder Polyamine (b11) mit einer mittleren Funktionalität von 2,5 bis 8, 2 bis 30 Gew.-%, bezogen auf das Gesamtgewicht des Polyetherpolyols (b1), einer oder mehrerer Fettsäuren und/oder Fettsäuremonoester (b12) und 35 bis 70 Gew.-%, bezogen auf das Gesamtgewicht des Polyetherpolyols (b1), Propylenoxid (b13) und mindestens 20 Gew.-%, bezogen auf das Gesamtgewicht der Komponente (b), Polyesterpolyol (b2) mit einer mittleren Funktionalität von 2,4 oder größer und einer OH-Zahl von 280 mg KOH/g oder mehr und gegebenenfalls ein oder mehrere amingestartete Polyetherpolyole (b3), ein oder mehrere hochfunktionelle Polyetherpolyole (b4) mit einer mittleren Funktionalität mindestens 5,0 sowie ein oder mehrere Kettenverlängerungsmittel und/oder Vernetzungsmittel (b5) enthält, und in der Komponente (b) neben den Komponenten (b1) bis (b5) weniger als 20 Gew.-%, bezogen auf das Gesamtgewicht der Komponente (b), weitere Verbindungen mit mindestens zwei mit Isocyanatgruppen reaktiven Wasserstoffatomen enthalten sind. Weiter betrifft die vorliegende Erfindung einen Polyurethan-Hartschaumstoff, erhältlich nach einem solchen Verfahren sowie die Verwendung eines erfindungsgemäßen Polyurethanhartschaumstoffs bei der Herstellung von Sandwichelementen.

Die Herstellung von Polyurethan-Hartschaumstoffen durch Umsetzung von Polyisocyanaten mit höhermolekularen Verbindungen mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren in Gegenwart von Polyurethankatalysatoren, Kettenverlängerungs- und/oder Vernetzungsmitteln, Treibmitteln und weiteren Hilfs- und Zusatzstoffen ist bekannt und wird in zahlreichen Patent- und Literaturveröffentlichungen beschrieben.

Polyurethan-Hartschaumstoffe werden häufig als Dämmmaterial zur Wärmeisolation verwendet. Dabei werden die Schaumstoffe beispielsweise zur Herstellung von Kühlgeräten, Behältern oder flächigen Verbundelementen mit mindestens einer Deckschicht eingesetzt. Hierzu werden Polyurethan-Hartschaumstoffe mit einer hohen mechanischen Festigkeit, geringer Wärmeleitfähigkeit, einer hohen Feuerfestigkeit und einer möglichst fehlerfreien Oberfläche benötigt.

Insbesondere im Baubereich, z.B. bei Verbundelementen aus metallischen Deckschichten und einem Kern aus Polyurethan, ist ein gutes flammwidriges Verhalten der Polyurethanhartschaumstoffe von besonderer Bedeutung. Aus diesem Grund wurden Polyisocyanurat-Hartschaumstoffe entwickelt, die gegenüber Polyurethan-Hartschaumstoffen eine verbesserte Flammfestigkeit aufweisen und eine starke Reduzierung der Flammschutzmittelanteile in der Reaktionskomponente ermöglichen. Unter einem Polyisocyanurat-Hartschaum wird üblicherweise ein Schaumstoff verstanden, der neben Urethan- auch Isocyanuratgruppen enthält. Im Rahmen der Erfindung soll der Begriff Polyurethan-Hartschaumstoff auch Polyisocyanurat-Hartschaumstoff einschließen, wobei zur Herstellung von Polyisocyanurat-Schaumstoffen bei Isocyanat-Kennzahlen von größer 180 gearbeitet wird. Ein großes Problem der heute nach dem Stand der Technik bekannten Polyisocyanurat-Hartschaumstoffe ist eine unzureichende Schaumhaftung an den metallischen Deckschichten. Um diesen Mangel zu beheben, wird üblicherweise zwischen der Deckschicht und dem Schaumstoff ein Haftvermittler aufgebracht, wie beispielsweise in EP1516720 beschrieben. Außerdem ist bei der Verarbeitung von Polyisocyanurat-Hartschaumstoffen in der Regel eine hohe Formtemperatur von > 60 °C erforderlich, um eine ausreichende Trimerisierung der Polyisocyanat-Komponente zu gewährleisten, was zu einer höheren Vernetzungsdichte und somit zu besseren Temperaturstabilitäten, Druckfestigkeiten und Flammfestigkeiten im Schaum führt. Sowohl die Erhöhung der Formtemperatur als auch das Auftragen eines Haftvermittlers erhöht die Komplexität und reduziert die Wirtschaftlichkeit bei der Bauteilherstellung, weshalb beide Maßnahmen aus produktionstechnischer und ökonomischer Sicht, nicht wünschenswert sind.

Polyurethan-Hartschaumstoffe zeigen im Vergleich zu Polyisocyanurat-Hartschaumstoffen meist eine deutlich bessere Schaumhaftung zu den metallischen Deckschichten und lassen sich bei deutlich geringeren Verarbeitungstemperaturen umsetzen.

Flammgeschützte Polyurethanhartschaumstoffe, die bei einem Isocyanat-Index von 160 und weniger verarbeitet werden und die vertikale Brandprüfung nach DIN EN ISO 11925-2 bestehen, enthalten in der Regel einen deutlich höheren Anteil an flüssigen halogenhaltigen Flammschutzmitteln.

EP0757068 B1 beschreibt beispielsweise ein Verfahren zur Herstellung von Polyurethan-Hartschaumstoffen bei deren Herstellung große Mengen an Chlor-, Brom- und Phosphorverbindungen in der Polyolkomponente eingesetzt werden. Aus ökotoxikologischen Gründen und aufgrund verbesserter Brandnebenerscheinungen ist es jedoch wünschenswert den Einsatz halogenierter Flammschutzmittel, insbesondere bromierter Flammschutzmittel in der Polyolkomponente möglichst gering zu halten. Der Einsatz von halogenfreien Flammschutzmitteln führt meist zu einer Verschlechterung der mechanischen Eigenschaften des Schaumstoffs, da gängige, flüssige halogenfreie Flammschutzmittel meist weichmachende Eigenschaften aufweisen und aufgrund ihrer reduzierten Gasphasenaktivität häufig in deutlich größeren Anteilen in Polyurethan-Hartschaumstoff-Polyolkomponenten eingesetzt werden müssen, um vergleichbare Flammfestigkeiten des Schaums zu erhalten.

EP2561002 B1 beschreibt den Aufbau einer Polyolkomponente, enthaltend ein Fettsäurebasiertes aromatisches Polyesterpolyol und ein Polyetherpolyol mit einer Funktionalität von 4 - 8, sowie einer Hydroxylzahl von 300 - 600 mg KOH/g. Das Umsetzen dieser Polyolkomponente bei mittleren Isocyanat Kennzahlen im Bereich von 170 - 230 bei Verarbeitungstemperaturen zwischen 40 und 50 °C ermöglicht im Vergleich zu den flammgeschützten konventionellen PUR Hartschaumstoffen, eine deutliche Einsparung an Flammschutzmittel. Allerdings weisen diese PUR/PIR Hybridsysteme ein deutlich schlechteres Aushärteverhalten auf, was bei der Herstellung von Verbundelementen zu einer Wellenbildung führen kann. Besonders die Verarbeitung dünner Sandwichelemente mit Dicken unter 60 mm, führt aufgrund der niedrigen Wärmeentwicklung im Reaktionsgemisch häufig zu Problemen in Härtung, Deckschichthaftung und Flammfestigkeit des Hartschaums.

EP 3619250 zeigt auf, dass mit speziellen Polyolkomponenten, die einen hohen Anteil an aromatischen Mannichpolyolen in Kombination mit speziellen Silikonstabilisatoren aufweisen, große Mengen an Flammschutzmitteln eingespart werden können. Die hierfür erforderliche hohe Menge an Mannichpolyol und weiterem Aminpolyol, führt jedoch zu einer sehr hohen Temperaturentwicklung im aushärtenden Reaktionsgemisch, was bei der kontinuierlichen Herstellung von Sandwichelementen zu einer deutlich größeren Elementdicke in der Panelmitte und somit zu einer schlechteren Planlage der hergestellten Elemente führt. Bei der diskontinuierlichen Herstellung von Bauteilen wird eine längere Entformzeit notwendig, weshalb ein Einsatz von hohen Anteilen reaktiver aromatischer Mannichpolyole, nicht wünschenswert ist.

Leider führt die Verwendung der in EP 3619250 beschriebenen Schaumstabilisatoren auch oft zu einer ungenügenden Schaumstabilisierung, weshalb eine Verbesserung der Schaumoberflächen und eine Reduzierung der mittleren Zellgrößen, insbesondere bei Verwendung von silikonhaltigen Schaumstabilisatoren, die sich positiv auf die Brandprüfung nach DIN EN ISO 11925-2 auswirken, wünschenswert ist.

Auch ist die Ausbildung von Oberflächendefekten, insbesondere an der Grenzfläche zu Deckschichten, ein generelles Problem bei Polyurethan-Hartschaumstoffen. Diese Schaumoberflächendefekte bedingen die Ausbildung einer unebenen Deckschichtoberfläche und führen somit zu einer optischen Beanstandung und einer erhöhten Wärmeleitfähigkeit der Polyurethanbasierten Bauteile.

Aufgabe der vorliegenden Erfindung war es, daher das Eigenschaftsprofil bekannter Polyurethan-Hartschaumstoffe zu verbessern. Insbesondere war es Aufgabe der vorliegenden Erfindung einen Polyurethan-Hartschaumstoff zu liefern, der eine hervorragende Flammfestigkeit, hervorragende mechanische Eigenschaften, wie Druckfestigkeit und Sprödigkeit, eine hervorragende Wärmeleitfähigkeit, und eine hervorragende Oberflächengüte aufweist. Weiter war es Aufgabe, ein Verfahren zur Herstellung eines solchen Polyurethan-Hartschaumstoffs zu liefern, das eine schnelle Aushärtung der Reaktionsmischung zum Schaum, auch bei Formtemperaturen von kleiner als 60 °C, insbesondere 50 °C oder weniger, ermöglicht und eine gute Haftung zu Deckschichten, beispielsweise bei der Herstellung von Sandwichelementen, aufweist.

Diese Aufgabe wird gelöst durch ein Verfahren zur Herstellung von Polyurethan-Hartschaumstoffen, bei dem man (a) Polyisocyanate mit (b) Verbindungen mit mindestens zwei mit Isocyanatgruppen reaktiven Wasserstoff-atomen, (c) gegebenenfalls Flammschutzmittel (d) Treibmittel, (e) Katalysator und (f) gegebenenfalls Hilfs- und Zusatzstoffe zu einer Reaktionsmischung vermischt und zum Polyurethan-Hartschaumstoff aushärtet, wobei die Komponente (b) mindestens ein Polyetherpolyol (b1), hergestellt durch Umsetzung von 15 bis 40 Gew.-%, bezogen auf das Gesamtgewicht des Polyetherpolyols (b1), eines oder mehrerer Polyole oder Polyamine (b11) mit einer mittleren Funktionalität von 2,5 bis 8, 2 bis 30 Gew.-%, bezogen auf das Gesamtgewicht des Polyetherpolyols (b1), einer oder mehrerer Fettsäuren und/oder Fettsäuremonoester (b12) und 35 bis 70 Gew.-%, bezogen auf das Gesamtgewicht des Polyetherpolyols (b1), Propylenoxid (b13) und wobei mindestens 20 Gew.-%, bezogen auf das Gesamtgewicht der Komponente (b), Polyesterpolyol (b2) mit einer mittleren Funktionalität von 2,4 oder größer und einer OH-Zahl von 280 mg KOH/g oder mehr und gegebenenfalls ein oder mehrere amingestartete Polyetherpolyole (b3), ein oder mehrere hochfunktionelle Polyetherpolyole (b4) mit einer mittleren Funktionalität mindestens 5,0 sowie ein oder mehrere Kettenverlängerungsmittel und/oder Vernetzungsmittel (b5) enthält, und in der Komponente (b) neben den Komponenten (b1) bis (b5) weniger als 20 Gew.-%, bezogen auf das Gesamtgewicht der Komponente (b), weitere Verbindungen mit mindestens zwei mit Isocyanatgruppen reaktiven Wasserstoffatomen enthalten sind.. Weiter betrifft die vorliegende Erfindung einen Polyurethan-Hartschaumstoff, erhältlich nach einem solchen Verfahren sowie die Verwendung eines erfindungsgemäßen Polyurethanhartschaumstoffs bei der Herstellung von Sandwichelementen.

Im Rahmen der Erfindung wird unter Polyurethan-Hartschaumstoff ein geschäumtes Polyurethan, bevorzugt ein Schaumstoff gemäß DIN 7726, verstanden, der eine Druckfestigkeit nach DIN 53 421 / DIN EN ISO 604 von größer gleich 80 kPa, bevorzugt größer gleich 150 kPa, besonders bevorzugt größer gleich 180 kPa aufweist. Weiterhin verfügt der Polyurethan-Hartschaumstoff nach DIN ISO 4590 über eine Geschlossenzelligkeit von größer 50%, vorzugsweise größer 85% und besonders bevorzugt größer 90%.

Als Polyisocyanate (a) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische (TDI), 4,4'-, 2,4'- 2,2'-Diphenylmethandiisocyanat und höherkernige Homologe des Diphenylmethandiisocyanat und die entsprechenden Mischungen (MDI), Mischungen aus 4,4'-, 2,4'- und 2,2'-Diphenylmethandiisocyanaten und Polyphenylpolymethylenpolyisocyanaten (Polymer-MDI) und Mischungen aus MDI und TDI.

Insbesondere geeignet sind 2,2'-, 2,4'- und/oder 4,4'-Diphenylmethandiisocyanat sowie höherkernige Homologe des Diphenylmethandiisocyanat (MDI), 1,5-Naphthylendiisocyanat (NDI), 2,4- und/oder 2,6-Toluylendiisocyanat (TDI), 3,3'-Dimethyl-diphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate, häufig auch zusammen mit nicht umgesetzten Polyisocyanaten

Besonders bevorzugt enthalten die Polyisocyanate der Komponente (a) 2,2'-MDI oder 2,4'-MDI oder 4,4'-MDI (auch als monomeres Diphenylmethan oder MMDI bezeichnet) oder oligomeres MDI, das aus höherkernigen Homologen des MDI, welche mindestens 3 aromatische Kerne und eine Funktionalität von mindestens 3 aufweisen, besteht, oder Mischungen mindestens zweier dieser Isomere, gegebenenfalls auch Mischungen mindestens eines Isomeren des MDI mit mindestens einem höherkernigen Homologen des MDI, oder Roh-MDI, welches bei der Herstellung von MDI anfällt, oder bevorzugt Mischungen aus mindestens einem höherkernigen Homologen des MDI und mindestens einem der vorgenannten niedermolekularen MDI-Derivate 2,2'-MDI, 2,4'-MDI oder 4,4'-MDI (auch als polymeres MDI bezeichnet). Üblicherweise werden die Isomeren und Homologen des MDI durch Destillation von Roh-MDI erhalten.

Besonders bevorzugt als Isocyanat (a) eingesetzt wird polymeres MDI. Die mittlere Funktionalität eines Polymeren MDI's variiert vorzugsweise im Bereich von 2,2 bis 4, besonders bevorzugt von 2,4 bis 3,8 und insbesondere von 2,6 bis 3,0. Polymeres MDI wird beispielsweise von BASF Polyurethanes GmbH unter dem Namen Lupranat^{®} M20 oder Lupranat^{®} M50 vertrieben.

Vorzugsweise enthält die Komponente (a) mindestens 70, besonders bevorzugt mindestens 90 und insbesondere 100 Gew.-%, bezogen auf das Gesamtgewicht der Komponente (a), ein oder mehrere Isocyanate, ausgewählt aus der Gruppe, bestehend aus 2,2'-MDI, 2,4'-MDI, 4,4'-MDI und Oligomeren des MDI. Dabei beträgt der Gehalt an oligomerem MDI vorzugsweise mindestens 20 Gew.-%, besonders bevorzugt größer 30 bis kleiner 80 Gew.-%, bezogen auf das Gesamtgewicht der Komponente (a).

Die Viskosität der eingesetzten Komponente (a) kann in einem weiten Bereich variieren. Vorzugsweise weist die Komponente (a) eine Viskosität von 100 bis 3000 mPa*s, besonders bevorzugt von 100 bis 1000 mPa*s, insbesondere bevorzugt von 100 bis 600 mPa*s, spezieller von 200 bis 600 mPa*s und im speziellen von 400 bis 600 mPa*s bei 25 °C, auf.

Die Verbindungen mit mindestens zwei mit Isocyanatgruppen reaktiven Wasserstoffatomen (b) enthalten mindestens ein fettsäurebasiertes Polyetherpolyol (b1) und mindestens ein Polyesterpolyol (b2), wobei der Gewichtsanteil des Polyesterpolyols (b2) mindestens 20 Gew.-%, bezogen auf das Gesamtgewicht der Komponente (b), beträgt.

Das fettsäurebasierte Polyetherol (b1) ist herstellbar durch Umsetzung von 15 bis 40 Gew.-%, bezogen auf das Gesamtgewicht des Polyetherpolyols (b1), eines oder mehrerer Polyole oder Polyamine (b11) mit einer mittleren Funktionalität von 2,5 bis 8, 2 bis 30 Gew.-%, bezogen auf das Gesamtgewicht des Polyetherpolyols (b1), einer oder mehrerer Fettsäuren und/oder Fettsäuremonoester (b12) und 35 bis 70 Gew.-%, bezogen auf das Gesamtgewicht des fettsäurebasierten Polyetherpolyols (b1), Propylenoxid (b13).

Die Polyetherole (b1) werden nach bekannten Verfahren, beispielsweise durch anionische Polymerisation von Alkylenoxiden, enthaltend Propylenoxid (b13), unter Zusatz mindestens eines Polyalkohols (b11) als Startermolekül, das 2 bis 8, vorzugsweise 2 bis 6 reaktive Wasserstoffatome gebunden enthält, und einer oder mehrerer Fettsäuren und/oder Fettsäuremonoester (b12) als co-Starter in Gegenwart von Katalysatoren erhalten. Dabei beträgt der Anteil des Polyalkohols (b11), 15 bis 40 Gew.-%, vorzugsweise 18 bis 35 Gew.-/ und insbesondere 20 bis 30 Gew.-%, der des co-Starters 2 bis 30 Gew.-%, vorzugsweise 3 bis 25 Gew.-% und insbesondere 5 bis 20 Gew.-%, jeweils bezogen auf das Gesamtgewicht des Polyetherols (b1).

Die mittlere (nominale) Funktionalität der Startermoleküle (b11) und (b12) beträgt dabei mindestens 2,5, vorzugsweise 2,6 bis 8, mehr bevorzugt 2,7 bis 6,5 und insbesondere 3 bis 6. Im Rahmen der vorliegenden Anmeldung ist die mittlere Funktionalität die mittlere nominale Funktionalität der Polyetherole. Diese bezieht sich auf die Funktionalität der Startermoleküle. Werden Mischungen aus Startermolekülen mit unterschiedlicher Funktionalität eingesetzt, können gebrochenzahlige Funktionalitäten erhalten werden. Einflüsse auf die Funktionalität, beispielsweise durch Nebenreaktionen, werden bei der nominalen Funktionalität nicht berücksichtigt.

Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Auch aminische Alkoxylierungs-Katalysatoren, wie Dimethylethanolamin (DMEOA), Imidazol und Imidazolderivate können eingesetzt werden. Weiterhin können als Katalysatoren auch Doppelmetallcyanidverbindungen, sogenannte DMC-Katalysatoren, eingesetzt werden.

Als Alkylenoxid wird Propylenoxid (b13), gegebenenfalls zusammen mit weiteren Alkylenoxiden eingesetzt. Vorzugsweise werden als weitere Alkylenoxide eine oder mehrere Verbindungen mit 2 bis 4 Kohlenstoffatomen im Alkylenrest, wie Tetrahydrofuran, 1,2-Propylenoxid, Ethylenoxid, 1,2- bzw. 2,3-Butylenoxid, jeweils allein oder in Form von Mischungen eingesetzt. Vorzugsweise verwendet werden Ethylenoxid und/oder 1,2-Propylenoxid, im speziellen ausschließlich 1,2-Propylenoxid. Dabei beträgt der Anteil an Propylenoxid, bezogen auf das Gesamtgewicht des Polyetherpolyols (b1) 35 bis 70 Gew.-%, vorzugsweise 40 bis 65 Gew.-%.

Als Polyalkohole (b11) kommen Hydroxylgruppen- oder Amingruppenhaltige Verbindungen, beispielsweise Ethylenglycol, Diethylenglycol, Glycerin, Trimethylolpropan, Pentaerythrit, Zuckerderivate, wie Saccharose, Hexitderivate, wie Sorbit, Methylamin, Ethylamin, Isopropylamin, Butylamin, Benzylamin, Anilin, Toluidin, Toluoldiamin (TDA), Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht. Da diese hochfunktionellen Verbindungen bei den üblichen Reaktionsbedingungen der Alkoxylierung in fester Form vorliegen, ist es allgemein üblich diese in einer Mischung mit weiteren Initiatoren zu alkoxylieren. Als solche weiteren Initiatoren eignen sich z.B. Wasser, mehrfunktionelle niedere Alkohole, z.B. Glyzerin, Trimethylolpropan, Pentaerythrit, Diethylenglycol, Ethylenglycol, Propylenglycol und deren Homologe.

Als weitere Initiatoren (b12) kommen beispielsweise in Betracht: organische Fettsäuren, Fettsäuremonoester oder Fettsäuremethylester wie z.B. Ölsäure, Stearinsäure, Ölsäuremethylester, Stearinsäuremethylester oder Biodiesel, welche dazu dienen die Treibmittellöslichkeit bei der Herstellung von Polyurethanhartschaumstoffen zu verbessern. Dabei ist es erfindungswesentlich, dass die mittlere Funktionalität der Startermoleküle (b11 und b12), mindestens 2,5 beträgt.

Bevorzugte Polyole (b11) zur Herstellung der Polyetherpolyole (b1) sind Sorbitol, Saccharose, Ethylendiamin, TDA, Trimethylolpropan, Pentaerythrit, Glyzerinund Diethylenglycol. Besonders bevorzugte Startermoleküle sind Saccharose, Glycerin, TDA und Ethylendiamin, insbesondere Saccharose und/oder Glycerin, In einer besonders bevorzugten Ausführungsform werden als Polyole (b11) ein Gemisch, enthaltend Saccharose und/oder Glycerin, insbesondere ein Gemisch aus Glycerin und Saccharose eingesetzt.

Die im Rahmen von Komponente (b1) eingesetzten fettsäurebasierten Polyetherpolyole weisen vorzugsweise eine Funktionalität von 2,5 bis 8, besonders bevorzugt 2,8 bis 7, mehr bevorzugt 3 bis 6 und insbesondere von 3,5 bis 5,5 und zahlenmittlere Molekulargewichte von vorzugsweise 100 bis 1200, besonders bevorzugt von 150 bis 800 und insbesondere von 250 bis 600 auf. Die OH Zahl der Polyetherpolyole der Komponente (b1) beträgt vorzugsweise von 1200 bis 100, vorzugsweise von 1000 bis 200 und insbesondere von 800 bis 350 mg KOH/g.

Erfindungsgemäß enthält Komponente (b) mindestens 20 Gew.-%, vorzugsweise mindestens 30 Gew.-% und insbesondere mindestens 40 Gew.-% eines oder mehrerer Polyesterpolyole (b2) mit einer mittleren Funktionalität von 2,4 oder größer, vorzugsweise 2,4 bis 8, besonders bevorzugt 2,4 bis 5, und einer OH-Zahl von 280 mg KOH/g oder mehr, vorzugsweise 290 bis 500 mg KOH/g und insbesondere 300 bis 400 mg KOH/g. Geeignete Polyesterpolyole (b2) können durch Reaktion von Polycarbonsäuren, insbesondere von Dicarbonsäuren, und mehrwertigen Alkoholen erhalten werden, wobei die Alkoholkomponente im Überschuss eingesetzt wird. Als Polycarbonsäuren können dabei aliphatische Polycarbonsäuren, aromatische Polycarbonsäuren oder Mischungen daraus sowie deren Derivate eingesetzt werden. Dabei werden die Funktionalitäten der Ausgangssubstanzen so gewählt, dass ein Polyesterpolyol mit einer Funktionalität von mindestens 2,4 erhalten wird. Als Carbonsäurederivate können beispielsweise monomere, dimere, oligomere oder polymere Polycarbonsäureester von Alkoholen mit 1 bis 4 Kohlenstoffatomen oder Polycarbonsäureanhydride eingesetzt werden. Weiter umfassen die Polycarbonsäuren auch funktionalisierte Carbonsäuren, wie Hydroxycarbonsäuren.

In einer besonders bevorzugten Ausführungsform wird als Polyesterpolyol (b2) mindestens ein aromatischer Polyesterpolyol (b2a) eingesetzt. Der aromatische Polyesterpolyol (b2a) enthält mindestens 50 mol-%, vorzugsweise mindestens 80 mol-% und insbesondere 100 mol-% der zugrundeliegenden Säurekomponente aromatische Polycarbonsäuren. Dabei umfasst der Ausdruck "zugrundeliegende Säurekomponente" Polycarbonsäuren und deren Derivate, wie Anhydride und Ester. Aromatische Polyesterpolyole (b2a) weisen vorzugsweise eine Funktionalität von 2,4 bis 3,5, besonders bevorzugt 2,4 bis 3,0 und insbesondere 2,45 bis 2,8 und eine OH-Zahl von 280 bis 330 mg KOH/g und besonders bevorzugt 290 bis 320 mg KOH/g auf.

In einer weiteren bevorzugten Ausführungsform wird als Polyesterpolyol (b2) mindestens ein aliphatischer Polyesterpolyol (b2b) eingesetzt. Der aliphatische Polyesterpolyol (b2b) enthält mindestens 50 mol-%, vorzugsweise mindestens 80 mol-% und insbesondere 100 mol-% der zugrundeliegenden Säurekomponente aliphatische Polycarbonsäuren. Aliphatische Polyesterpolyole (b2b) weisen vorzugsweise eine Funktionalität von 2,4 bis 4,5, besonders bevorzugt mehr als 2,8 bis 4,0 und insbesondere mehr als 3,0 bis 3,5 und eine OH-Zahl von 300 bis 400 mg KOH/g und besonders bevorzugt 340 bis 380 mg KOH/g auf.

Aromatische Polyesterpolyole (b2a) und aliphatischen Polyesterpolyole (b2b) können gemeinsam eingesetzt werden, vorzugsweise werden aber entweder aromatische Polyesterpolyole (b2a) oder aliphatischen Polyesterpolyole (b2b) eingesetzt.

Polycarbonsäuren umfassen Dicarbonsäuren und höherfunktionelle Carbonsäuren, wie tricarbonsäuren. Als aliphatische Dicarbonsäuren, bzw. als aliphatische Dicarbonsäurederivate werden vorzugsweise Adipinsäure, Glutarsäure, Bernsteinsäure, Fumarsäure, Malonsäure, Maleinsäure, Oxalsäure, Pimelinsäure, Korksäure, Azelainsäure, Sebacinsäure oder deren Derivate verwendet. Beispiele für Derivate aliphatischer Polycarbonsäuren sind Dimethyladipat, und Diethyladipat. Besonders bevorzugt Verwendung finden Adipinsäure, Glutarsäure oder Bernststeinsäure oder deren Derivate, im Speziellen Adipinsäure oder Derivate der Adipinsäure.

Bevorzugte aliphatische, funktionalisierte Carbonsäuren sind Hydroxycarbonsäuren, Aminocarbonsäuren, Halogencarbonsäuren, Aldehydcarbonsäuren oder Ketocarbonsäuren. Vorzugsweise Verwendung finden Hydroxycarbonsäuren wie z.B. 6-Hydroxyhexansäure oder Ketocarbonsäuren. Vorzugsweise werden funktionalisierte Polycarbonsäuren ausschließlich für die Herstellung des aliphatischen Polyesterpolyol (b2b) eingesetzt, das heißt, dass aromatische Polyesterpolyole (b1a) vorzugsweise keine Reste funktionalisierter Carbonsäuren enthalten.

Als aromatische Dicarbonsäuren, bzw. als aromatische Dicarbonsäurederivate werden vorzugsweise Phthalsäure, Phthalsäureanhydrid, Terephthalsäure und/oder Isophthalsäure sowie deren Derivate, wie Dimethylterephtalat, Diethylterephtalat, Dimethylphtalat, Diethylphtalat, oligomeres oder polymeres Ethylenterephtalat, sowie deren Recyclate und oligomeres oder polymeres Butylenterephtalat, sowie deren Recyclate, im Gemisch oder allein verwendet, bevorzugt Verwendung finden Phthalsäure, Phthalsäureanhydrid und Terephthalsäure. Besonders bevorzugt ist die Verwendung von Terephthalsäure oder Dimethylterephthalat, im Speziellen Terephthalsäure.

Neben aliphatischen und/oder aromatischen Polycarbonsäuren und/oder funktionalisierten, aliphatische Carbonsäuren können zusätzlich auch monofunktionelle Carbonsäuren oder Umsetzungsprodukte von monofunktionellen Carbonsäuren eingesetzt werden. Als monofunktionelle Carbonsäuren können z.B. gesättigte oder ungesättigte Monocarbonsäuren mit 1 bis 24 Kohlenstoffatomen eingesetzt werden. Beispiele sind Ameisensäure, Essigsäure, Propionsäure, Acrylsäure, Buttersäure, Valeriansäure, Capronsäure, Benzoesäure, Heptansäure, Caprylsäure, Nonansäure, Caprinsäure, und Fettsäuren wie z.B. Laurinsäure, Myristinsäure, Palmitinsäure, Stearinsäure, Ölsäure, Ricinolsäure, Linolsäure, Linolensäure.

Als Umsetzungsprodukte von monofunktionellen Carbonsäuren können auch biobasierte Ausgangsstoffe und/oder deren Derivate eingesetzt werden, wie z. B. Rizinusöl, Polyhydroxyfettsäuren, Hydroxyl-modifizierte Öle, Weintraubenkernöl, schwarzes Kummelöl, Kurbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, o,- und y-Linolensäure, Stearidonsäure, Arachidonsäure, Timnodonsäure, Clupanodonsäure und Cervonsäure.

Insofern monofunktionelle Carbonsäuren oder deren Derivate bei der Herstellung der Polyesterpolyole (b2) eingesetzt werden, geschieht die vorzugsweise in solchen Mengen, dass das Polyesterpolyol (b2), bezogen auf sein Gesamtgewicht, ≤ 5 Gew.-%, insbesondere ≤ 2,5 Gew.-%, und im speziellen keine Fettsäurereste enthält.

Beispiele für mehrwertige Alkohole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol, bzw. deren Alkoxylate. Vorzugsweise verwendet werden Ethylenglycol, Diethylenglykol, Propylenglycol, Glycerin, Trimethylolpropan, bzw. deren Alkoxylate oder Mischungen aus mindestens zwei der genannten mehrwertigen Alkohole, insbesondere Diethylenglycol und/oder Glycerin.

In einer speziellen Ausführungsform wird als aromatisches Polyesterpolyol (b2a) ein Polyesterpolyol verwendet, welcher einen Gehalt and 1,2- 1,3- und 1,4-Benzoldicarbonsäureresten im Polyesterol (b2) von mindestens 30 Gew.-%, vorzugsweise 35 bis 75 Gew.-%, besonders bevorzugt 40 bis 70 Gew.-% und insbesondere 45 bis 65 Gew.-%, jeweils bezogen auf das Gesamtgewicht des Polyesterpolyols (b2) enthält. Hierbei wirkt sich der hohe Aromatengehalt positiv auf die Brandfestigkeit aus.

In einer weiteren speziellen Ausführungsform wird als aliphatisches Polyesterpolyol (b2b) ein aliphatisches Polyesterpolyol verwendet, bei dessen Herstellung eine Mischung von Abfallstoffen eingesetzt wird, welche bei der Oxidation von Cyclohexan zu Cyclohexanol und Cyclohexanon entsteht und Carbonsäuren wie Adipinsäure, 6-Hydroxycapronsäure, Valeriansäure, Buttersäure, Essigsäure, Capronsäure, Ameisensäure, Bernsteinsäure, Propionsäure, Isovaleriansäure und Wasser und weitere Substanten, wie Oligomere, Ketosäure, Cyclohexanon Dimere, oder Teer Stoffe enthält. Die Herstellung solcher Ester wird beispielsweise in US 9.982.089 B2 beschrieben.

Besonders bevorzugt erfolgt die Kondensation des aliphatischen Polyesterpolyols (b2b) durch Kondensation einer Mischung, enthaltend 20 bis 27 Gew.-% Adipinsäure, 10 bis 15 Gew.-% 6-Hydroxycapronsäure, 10 bis 13 Gew.-% Valeriansäure, 20 bis 45 Gew.-% Buttersäure, 2 bis 3 Gew.-% Essigsäure, 1 bis 3 Gew.-% Capronsäure, bis zu 1,5 Gew.-% Ameisensäure, bis zu einem Gew.-% Bernstinsäure, bis zu einem Gew.-% Propionsäure, bis zu 0,5 Gew.-% Isovaleriansäure und ca. 10 bis 22 Gew.-% Wasser sowie bis zu 25 % nicht näher identifizierter Substanzen, wie Oligomere, Ketosäure, Cyclohexanon Dimere, oder Teer.

Hierbei wirkt sich der hohe Aliphaten Gehalt positiv auf die Schaumqualität und die Verarbeitbarkeit aus. Weiterhin lässt sich durch die Verwendung solcher Polyesterpolyole der Recyclinganteil im entstehenden Hartschaum erhöhen.

Die Herstellung der Polyesterpolyole (b2) ist bekannt. Zur Herstellung der Polyesterpolyole (b2) können die aliphatischen und/oder aromatischen Polycarbonsäuren oder deren Derivate und, falls vorhanden die Monocarbonsäuren und/oder deren Derivate und/oder oder die funktionalisierten Carbonsäuren und/oder deren Derivate mit den mehrwertigen Alkohole katalysatorfrei oder vorzugsweise in Gegenwart von Veresterungskatalysatoren, zweckmäßigerweise in einer Atmosphäre aus Inertgas wie Stickstoff in der Schmelze bei Temperaturen von 150 bis 280°C, vorzugsweise 180 bis 260°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den oben genannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Neben dem fettsäurebasierten Polyetherpolyol (b1) und dem Polyesterpolyol (b2) können die Verbindungen mit mindestens zwei mit Isocyanatgruppen reaktiven Wasserstoffatomen (b) noch amingestartete Polyetherpolyole (b3) und hochfunktionelle Polyetherpolyole (b4) sowie Kettenverlängerungsmitten und Vernetzungsmittel (b5) enthalten.

Die amingestarteten Polyetherpolyole (b3) und die hochfunktionellen Polyetherole (b4) sind analog zum Polyetherpolyol (b1) durch Alkoxylierung eines Startermoleküls erhältlich. Im Fall des amingestarteten Polyetherpolyols (b3) werden als Startermoleküle vorzugsweise Ethylendiamin, Toluylendiamin oder Mischungen davon eingesetzt. Im Rahmen der vorliegenden Erfindung gelten Mannichverbindungen nicht als amingestartete Polyole. Die Hydroxylzahl des amingestarteten Polyethers (b3) beträgt vorzugsweise 200 bis 850, besonders bevorzugt 400 bis 800 und insbesondere 500 bis 800 mg KOH/g.

Im Fall des hochfunktionellen Polyetherpolyols (b4) beträgt die mittlere (nominelle) Funktionalität mindestens 5,0, vorzugsweise 5,5 bis 8, besonders bevorzugt 5,6 bis 6,5. Als Startermoleküle werden vorzugsweise Zuckermoleküle, wie Saccharose, besonders bevorzugt in Mischungen mit Glycerin, eingesetzt. Die Hydroxylzahl des hochfunktionellen Polyethers (b4) beträgt vorzugsweise mindestens 400, besonders bevorzugt 400 bis 900 und insbesondere 410 bis 700 mg KOH/g.

Als Alkylenoxide können zur Herstellung der amingestarteten Polyetherole (b3) und der hochfunktionellen Polyetherole (b4) die unter (b1) genannten Alkylenoxide einzeln oder in Mischungen eingesetzt werden. Vorzugsweise verwendet werden Ethylenoxid und/oder 1,2-Propylenoxid, im speziellen ausschließlich 1,2-Propylenoxid. Auch das Herstellverfahren des amingestarteten Polyetherols (b3) und des hochfunktionellen Polyetherols (b4) kann analog zur Herstellung des Polyetherols (b1) erfolgen.

Weiter kann die Komponente (b) Kettenverlängerungs- und/oder Vernetzungsmittel (b5) enthalten, beispielsweise zur Modifizierung der mechanischen Eigenschaften, z. B. der Härte. Als Kettenverlängerungs- und/oder Vernetzungsmittel verwendet werden Diole und/oder Triole sowie Aminoalkohole mit Molekulargewichten kleiner als 150 g/mol, vorzugsweise von 60 bis 130 g/mol. In Betracht kommen beispielsweise aliphatische, cycloaliphatische und/oder araliphatische Diole mit 2 bis 8, vorzugsweise 2 bis 6 Kohlenstoffatomen, wie z. B. Ethylenglykol, 1,2-Propylenglycol, Diethylenglycol, Dipropylenglycol, 1,3-Propandiol, 1,4-Butandiol, 1,6-Hexandiol, o-, m-, p-Dihydroxycyclohexan, Bis-(2-hydroxy-ethyl)-hydrochinon. Ebenso in Betracht kommen aliphatische und cycloaliphatische Triole wie Glycerin, Trimethylolpropan und 1,2,4- und 1,3,5-Trihydroxycyclohexan.

Sofern zur Herstellung der Polyurethan-Hartschaumstoffe Kettenverlängerungsmittel, Vernetzungsmittel oder Mischungen davon Anwendung finden, werden diese zweckmäßigerweise in einer Menge von 0 bis 15 Gew.-%, vorzugsweise von 0 bis 5 Gew.-%, bezogen auf das Gesamtgewicht der Komponente (b) eingesetzt. Vorzugsweise enthält die Komponente (b) weniger als 2 Gew.-% und besonders bevorzugt weniger als 1 Gew.-% und insbesondere kein Kettenverlängerungs- und/oder Vernetzungsmittel (b5).

Sollte dabei das Polyetherpolyol (b1) amingestartet sein oder eine Funktionalität von 5,0 oder größer aufweisen, wird dieses im Rahmen der vorliegenden Erfindung als Polyetherpolyol (b1) und nicht als Polyetherpolyol (b3) oder Polyetherpolyol (b4) betrachtet.

Vorzugsweise enthält die Komponente (b) 10 bis 40 Gew.-%, vorzugsweise 12 bis 35 Gew.-% fettsäurebasiertes Polyetherpolyol (b1), 20 bis 65 Gew.-%, vorzugsweise 25 bis 65 Gew.-%, besonders bevorzugt 30 bis 60 Gew.-% und insbesondere 40 bis 60 Gew.-% Polyesterpolyol (b2), 0 bis 20 Gew.-%, vorzugsweise 5 bis 15 Gew.-% amingestartetes Polyetherpolyol (b3) und 0 bis 30 Gew.-%, vorzugsweise 5 bis 25 Gew.-% hochfunktionelles Polyetherpolyol (b4), und 0 bis 5 Gew.-% Kettenverlängerungs- und/oder Vernetzungsmittel (b5), jeweils bezogen auf das Gesamtgewicht der Komponente (b).

In der Komponente (b) sind neben den Komponenten (b1) bis (b5) weniger als 20 Gew.-%, bevorzugt weniger als 10 Gew.-%, jeweils bezogen auf das Gesamtgewicht der Komponente (B), und insbesondere keine weiteren Verbindungen mit mindestens zwei mit Isocyanatgruppen reaktiven Wasserstoffatomen enthalten. Dabei beträgt die mittlere Funktionalität der Komponente (B) vorzugsweise 3,0 bis 6,0 und die Hydroxylzahl 350 bis 900 mg KOH/g,

Die erfindungsgemäß verwendete Komponente (b) hat besonders bevorzugt eine mittlere Hydroxylzahl von 300 bis 600 mg KOH/g, insbesondere 350 bis 550 mg KOH/g. Die Bestimmung der Hydroxylzahl erfolgt gemäß DIN 53240.

Als Flammschutzmittel (c) können im Allgemeinen die aus dem Stand der Technik bekannten Flammschutzmittel verwendet werden. Geeignete Flammschutzmittel sind beispielsweise bromierte Ester, bromierte Ether (Ixol) oder bromierte Alkohole wie Dibromneopentylakohol, Tribromneopentylalkohol und 2-(2-Hydroxyethoxy)ethyl 2-hydroxypropyl 3,4,5,6-tetrabromophthalate (PHT-4-Diol^{™}), sowie chlorierte Phosphate wie Tris-(2-chlorethyl)-phosphat, Tris-(2-chlorisopropyl)-phosphat (TCPP), Tris-(1,3-dichlorpropyl)-phosphat, Trikresylphosphat, 10 Tris-(2,3-dibrompropyl)-phosphat, Tetrakis-(2-chlorethyl)-ethylendiphosphat, Dimethylmethanphosphonat, Diethanolaminomethylphosphonsäurediethylester, sowie handelsübliche halogenhaltige Flammschutzpolyole. Als weitere Phosphate oder Phosphonate können Diethylethanphosphonat (DEEP), Triethylphosphat (TEP), Dimethylpropylphosphonat (DMPP), Diphenylkresylphosphat (DPK) als flüssige Flammschutzmittel eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin, sowie gegebenenfalls Maisstärke oder Ammoniumpolyphosphat, Melamin, Blähgraphit und gegebenenfalls aromatische Polyesterpolyole zum Flammfestmachen der Polyurethan-Hartschaumstoffe verwendet werden.

Bevorzugt werden Flammschutzmittel verwendet, die bei Raumtemperatur flüssig sind. Besonders bevorzugt sind TCPP, TEP, DEEP, DMPP, DPK, PHT4-Diol^{™}, bromierte Ether und Tribromneopenthylalkohol, speziell TCPP, TEP und PHT4-Diol^{™} und insbesondere TCPP. In einer besonders bevorzugten Ausführungsform umfasst das Flammschutzmittel (c) phosphorhaltiges Flammschutzmittel und der Gehalt an Phosphor, bezogen auf das Gesamtgewicht der Komponenten (a) bis (f), beträgt vorzugsweise 0,9 bis 1,5 Gew.-%. Besonders bevorzugt wird als Flammschutzmittel ausschließlich phosphorhaltiges Flammschutzmittel eingesetzt.

Im Allgemeinen beträgt der Anteil des Flammschutzmittels (c), 10 bis 55 Gew.-%, bevorzugt 20 bis 50 Gew.-%, besonders bevorzugt 25 bis 35 Gew.-%, bezogen auf die Summe der Komponenten (b) bis (f).

Erfindungsgemäß wird mindestens ein Treibmittel (d) eingesetzt. Zu Treibmitteln, welche zur Herstellung der Polyurethan-Hartschaumstoffe verwendet werden, gehören vorzugsweise Wasser, Ameisensäure und Gemische daraus. Diese reagieren mit Isocyanatgruppen unter Bildung von Kohlenstoffdioxid und im Falle von Ameisensäure zu Kohlenstoffdioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel wie niedrig siedende Kohlenwasserstoffe eingesetzt werden. Geeignet sind insbesondere Flüssigkeiten, welche gegenüber den eingesetzten Isocyanaten inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind aliphatische oder cycloaliphatische Kohlenwasserstoffe mit 4 bis 8 Kohlenstoffatomen, wie Heptan, Hexan, und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen. Vorzugsweise werden keine halogenierten Kohlenwasserstoffe als Treibmittel verwendet. Vorzugsweise werden als chemische Treibmittel Wasser, Ameisensäure-Wasser-Mischungen oder Ameisensäure verwendet, besonders bevorzugte chemische Treibmittel sind Wasser oder Ameisensäure-Wasser-Mischungen, im speziellen ausschließlich Wasser.

Vorzugsweise enthält das Treibmittel (d) als physikalische Treibmittel aliphatische oder cycloaliphatische Kohlenwasserstoffe mit 4 bis 8 Kohlenstoffatomen, besonders bevorzugt Pentanisomere, bzw. Mischungen von Pentanisomeren. Die chemischen Treibmittel können dabei allein, d.h. ohne Zusatz von physikalischen Treibmitteln, oder zusammen mit physikalischen Treibmitteln verwendet werden. Vorzugsweise werden die chemischen Treibmittel zusammen mit physikalischen Treibmitteln verwendet, wobei die Verwendung von Wasser oder Ameisensäure-Wasser Mischungen zusammen mit Pentanisomeren oder Gemischen aus Pentanisomeren bevorzugt sind.

Die eingesetzte Menge des Treibmittels bzw. der Treibmittelmischung liegt im Allgemeinen bei 1 bis 30 Gew.-%, vorzugsweise 1,5 bis 20 Gew.-%, besonders bevorzugt 2,0 bis 15 Gew.-%, jeweils bezogen auf die Summe der Komponenten (b) bis (f). Dient Wasser oder eine Ameisensäure-Wasser-Mischung als Treibmittel, so wird es vorzugsweise der Komponente (b) in einer Menge von 0,2 bis 6 Gew.-%, bezogen auf die Komponente (b), zugesetzt. Der Zusatz des Wassers, oder der Ameisensäure-Wasser-Mischung kann in Kombination mit dem Einsatz der anderen beschriebenen Treibmittel erfolgen. Bevorzugt wird Wasser oder eine Ameisensäure-Wasser-Mischung in Kombination mit Pentan eingesetzt.

Als Katalysatoren (e) zur Herstellung der Polyurethan-Hartschaumstoffe werden insbesondere Verbindungen verwendet, die die Reaktion der reaktiven Wasserstoffatome, insbesondere Hydroxylgruppen, enthaltenden Verbindungen der Komponenten (b) mit den Polyisocyanaten (a) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo.-(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)-ethanol, N,N',N"-Tris-(dialkylaminoalkyl)hexahydrotriazine, z.B. N,N',N"-Tris-(dimethylaminopropyl)-s-hexahydrotriazin, und Triethylendiamin.

Als Katalysatoren kommen ferner in Betracht: Amidine, wie 2,3-Dimethyl-3,4,5,6-tetrahydro-pyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen.

Ebenso kommen Katalysatoren für die Trimerisierungsreaktion der NCO-Gruppen untereinander in Betracht: Isocyanuratgruppen bildende Katalysatoren, beispielsweise Ammoniumionen- oder Alkalimetallsalze, speziell Ammonium- oder Alkalimetallcarboxylate, allein oder in Kombination mit tertiären Aminen. Die Isocyanurat-Bildung führt zu einer stärkeren Vernetzung im Schaum und zu einer höheren Flammfestigkeit als die Urethan-Bindung.

Bevorzugt wird mindestens ein basischer Polyurethankatalysator verwendet, vorzugsweise aus der Gruppe der tertiären Amine. Insbesondere bevorzugt ist der Einsatz von Treibkatalysatoren wie Bis(2-dimethylaminoethyl)ether, Pentamethyldiethylentriamin, 2-(N,N-Dimethylaminoethxy)ethanol, oder N,N,N-(trimethyl-N-hydroxyethyl-bisaminoethylether). Speziell wird entweder Bis(2-dimethylaminoethyl)ether oder Pentamethyldiethylentriamin als einziger aminischer Polyurethankatalysator verwendet. Bevorzugt wird zusätzlich mindestens ein Katalysator aus der Gruppe der Trimerisierungskatalysatoren verwendet, vorzugsweise Amoniumionen- oder Alkalimetallsalze, besonders bevorzugt Ammonium- oder Alkalimetallcarboxylate.

Speziell wird entweder Kaliumacetat oder Kaliumformiat als einziger Trimerisierungskatalysator verwendet.

Besonders bevorzugt wird als Katalysator (e) ein Katalysatorgemisch eingesetzt, enthaltend tertiäres Amin als Polyurethankatalysator und ein Metall- oder Ammoniumcarboxylat als Trimerisierungskatalysator.

Die Katalysatoren werden zweckmäßigerweise in der geringsten wirksamen Menge verwendet. Der Anteil der Komponente (e) an der Gesamtmenge der Komponenten (b) bis (e) beträgt vorzugsweise von 0,01 bis 15 Gew.-%, insbesondere von 0,05 bis 10 Gew.-%, speziell von 0,1 bis 5 Gew.-%.

Der Reaktionsmischung zur Herstellung der Polyurethan-Hartschaumstoffe können gegebenenfalls noch weitere Hilfsmittel und/oder Zusatzstoffe (f) zugesetzt werden. Genannt seien beispielsweise Schaumstabilisatoren, oberflächenaktive Substanzen, Zellregler, Füllstoffe, Farbstoffe, Pigmente, Hydrolyseschutzmittel, fungistatische und bakteriostatisch wirkende Substanzen.

Als silikonhaltige Schaumstabilisatoren (F) werden silikonbasierte Verbindungen eingesetzt, die die Oberflächenspannung der Verbindungen mit mindestens zwei Isocyanatgruppen reaktiven Wasserstoffatomen (B), herabsetzen. Bei diesen Substanzen handelt es sich vorzugsweise um Verbindungen, die eine amphiphile Struktur aufweisen, das heißt zwei Molekülteile mit unterschiedlicher Polarität aufweisen. Vorzugsweise weist der silikonbasierte Zellstabilisator einen Molekülteil mit Siliziumorganischen Bausteinen, wie Dimethylsiloxan oder Methylphenylsiloxan, und einen Molekülteil mit einer chemischen Struktur, die den Polyolen aus Komponente (B) ähnelt, auf. Vorzugsweise handelt es sich dabei um Polyoxyalkyleneinheiten. Bevorzugt werden als silikonhaltige Zellstabilisatoren (F) Polysiloxan-Polyoxyalkylen-Blockcopolymere mit einem Oxyethylenanteil von größer 20 Gew.-%, besonders bevorzugt größer 75 Gew.-%, bezogen auf den gesamten Anteil Polyoxyalkyleneinheiten, eingesetzt. Vorzugsweise weisen diese Polyethylenoxyd- und/oder Polypropylenoxydeinheiten auf. Bevorzugt beträgt das Molekulargewicht der Polyoxyalkylen Seitenketten mindestens 1000 g/mol Seitenketten. Diese Verbindungen sind bekannt und beispielsweise beschrieben im "Kunststoffhandbuch, Band 7, Polyurethane", Carl Hanser Verlag, 3. Auflage 1993, Kapitel 3.4.4.2 und können beispielsweise hergestellt werden durch Umsetzung von Siloxan, beispielsweise Polydimethylsiloxan, mit Polyoxyalkylenen, insbesondere Polyethylenoxyd, Polypropylenoxyd oder Copolymeren aus Polyethylenoxyd und Polypropylenoxyd. Dabei können Polysiloxan-Polyoxyalkylen-Blockcopolymere erhalten werden, die die Oxyalkylenkette als Endgruppe oder als eine oder mehrere Seitenketten aufweisen. Die silikonhaltigen Schaumstabilisatoren können OH-Gruppen aufweisen. Besonders bevorzugt werden als silikonhaltige Schaumstabilisatoren solche eingesetzt, wie in EP 3619250 beschrieben.

Vorzugsweise wird der silikonhaltige Schaumstabilisator in einer Menge von 0,1 bis 10 Gew.-% besonders bevorzugt in Mengen von 0,5 bis 5 Gew.-% und insbesondere in Mengen von 1 - 4 Gew.-% silikonhaltiger Schaumstabilisator, bezogen auf das Gesamtgewicht der Komponenten (b) bis (f) eingesetzt. Dabei werden vorzugsweise neben dem silikonhaltigen Schaumstabilisator weniger als 20 Gew.-%, besonders bevorzugt weniger als 10 Gew.-%, mehr bevorzugt weniger als 5 Gew.-% und insbesondere keine weiteren Verbindungen eingesetzt, die üblicherweise als Schaumstabilisatoren in Polyurethanen verwendet werden. Dabei beziehen sich die Mengenangaben jeweils auf das Gesamtgewicht des silikonhaltigen Schaumstabilisators und der weiteren Schaumstabilisatoren.

Als oberflächenaktive Substanzen kommen z.B. Verbindungen in Betracht, welche zur Unterstützung der Homogenisierung der Ausgangsstoffe dienen. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung, falls eingesetzt, vorteilhafterweise in Mengen von 0,5 bis 50 Gew.-%, vorzugsweise 1 bis 40 Gew.-%, bezogen auf das Gewicht der Komponenten (b) bis (f), zugegeben, wobei jedoch der Gehalt an Matten, Vliesen und Geweben aus natürlichen und synthetischen Fasern Werte bis 80 Gew.-%, bezogen auf das Gewicht der Komponenten (b) bis (f), erreichen kann.

Nähere Angaben über die oben genannten üblichen Hilfs- und Zusatzstoffe (f) sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 und 1993 zu entnehmen.

Zur Herstellung der Polyurethan-Hartschaumstoffe werden die Polyisocycanate (a) and die Verbindungen (b), (d), (e) und, falls vorhanden (c) und (f), in solchen Mengen zur Umsetzung gebracht, dass der Isocyanatindex in einem Bereich zwischen 90 und 180, vorzugsweise zwischen 100 und 160 und besonders bevorzugt zwischen 105 und 150 liegt. Der Isocyanatindex ist das molare Verhältnis von Isocyanatgruppen zu mit Isocyanatgruppen reaktiven Gruppen multipliziert mit 100.

Die Ausgangskomponenten werden bei einer Temperatur von 15 bis 90 °C, vorzugsweise von 20 bis 60 °C, insbesondere von 20 bis 45 °C gemischt. Das Reaktionsgemisch kann mit Hoch- oder Niederdruckdosiermaschinen in geschlossene Stützwerkzeuge gegossen werden. Nach dieser Technologie werden z.B. diskontinuierliche Sandwichelemente gefertigt.

Dabei wird vorzugsweise eine Polyolkomponente (B) eingesetzt. Die zur Herstellung eines Polyurethan-Hartschaumstoffs eingesetzte Polyolkomponente (B) ist eine Vormischung der erfindungsgemäßen Komponenten (b), Verbindungen mit mindestens zwei mit Isocyanatgruppen reaktiven Wasserstoff-atomen, und (e), Katalysator. Zu dieser Vormischung kann weiter ganz oder teilweise auch die Komponente (d), Treibmittel, und, falls vorhanden, (c), Flammschutzmittel, und (f) Hilfs- und Zusatzstoffe, gegeben werden. Dies erleichtert die Produktion der erfindungsgemäßen Polyurethan-Hartschaumstoffe, da weniger Komponenten zur Herstellung der Reaktionsmischung zudosiert werden müssen.

Bevorzugt werden die erfindungsgemäßen Hartschaumstoffe auf kontinuierlich arbeitenden Doppelbandanlagen hergestellt. Hier werden mit einer Hochdruckmaschine die Polyolkomponente (B) und die Isocyanatkomponente (a) dosiert und in einem Mischkopf vermischt. Den Verbindungen mit mindestens zwei mit Isocyanatgruppen reaktiven Wasserstoff-atomen (b) können auch zuvor mit separaten Pumpen Katalysatoren und/oder Treibmittel zu dosiert werden. Das Reaktionsgemisch wird kontinuierlich auf die untere Deckschicht aufgetragen. Die untere Deckschicht mit dem Reaktionsgemisch und die obere Deckschicht laufen in das Doppelband ein, in dem das Reaktionsgemisch aufschäumt und aushärtet. Nach Verlassen des Doppelbandes wird der endlose Strang in die gewünschten Abmessungen zerschnitten. Auf diese Weise können Sandwichelemente mit metallischen Deckschichten oder Dämmelemente mit flexiblen Deckschichten hergestellt werden.

Als untere und obere Deckschichten, die gleich oder verschieden sein können, können üblicherweise im Doppelbandverfahren eingesetzte flexible oder starre Deckschichten verwendet werden. Diese umfassen Deckschichten aus Metall, wie Aluminium oder Stahl, Deckschichten aus Bitumen, Papier, Vliesstoffen, Kunststoffplatten, zum Beispiel aus Polystyrol, Kunststofffolien, wie Polyethylen-Folien oder Deckschichten aus Holz. Dabei können die Deckschichten auch beschichtet sein, beispielsweise durch einen üblichen Lack.

Die nach dem erfindungsgemäßen Verfahren hergestellten Polyurethan-Hartschaumstoffe weisen eine Dichte von 0,02 bis 0,75 g/cm³, vorzugsweise von 0,025 bis 0,24 g/cm³ und insbesondere von 0,03 bis 0,1 g/cm³ auf. Besonders eignen sie sich als Isolationsmaterial im Bau- oder Kühlsektor, z.B. als Zwischenschicht für Sandwichelemente oder zur Isolation von Kühlgeräten.

Die erfindungsgemäßen Polyurethan-Hartschaumstoffe zeichnen sich durch eine besonders hohe Flammwidrigkeit aus und ermöglichen daher den Einsatz von reduzierten Mengen an Flammschutzmittelmengen, insbesondere eine reduzierte Menge an toxischen, halogenierten Flammschutzmitteln. Vorzugsweise weisen die erfindungsgemäßen Hartschaumstoffe eine Flammenhöhe von weniger als 15 cm, vorzugsweise unter 14 cm und insbesondere von unter 13,5 cm nach einem Test entsprechend EN-ISO 11925-2 auf.

Weiterhin erfüllen die erfindungsgemäßen PUR-Hartschaumstoffe auch bei geringen Formtemperaturen < 55 °C und ohne zusätzlichen Haftvermittlerauftrag alle notwendigen Anforderungen an eine gute Verarbeitbarkeit und Endprodukteigenschaft: Schnelle Schaumhärtung, gute Schaumanhaftung auf metallischen Deckschichten, wenig Fehlstellen auf der Schaumoberfläche, gute Druckfestigkeiten und gutes Wärmedämmvermögen.

Der nach dem erfindungsgemäßen Verfahren erhaltene Polyurethan-Hartschaumstoff zeichnet sich durch hervorragende mechanische Eigenschaften, beispielsweise gute Druckfestigkeiten, schnelle Schaumhärtung, gute Schaumanhaftung auf metallischen Deckschichten, wenig Fehlstellen auf der Schaumoberfläche, ein homogenes fein-zelliges Schaumbild und gutes Wärmedämmvermögen aus. Weiter führt ein erfindungsgemäßes Verfahren dazu, dass die Reaktionsmischungen schnell zu Polyurethanhartschaumstoffen aushärten, ohne zu hohe Kerntemperaturen zu erzeugen, wodurch die Schäume schneller zu entformen sind bzw. die Druckzone im Doppelband kürzer gestaltet werden kann.

Im Folgenden wird die vorliegende Erfindung im Rahmen von Beispielen verdeutlicht:

### Beispiele

Es wurden die nachstehenden Einsatzstoffe verwendet:

### Polyetherol 1:

Herstellung eines Fettsäuremodifzierten Polyetheralkohols:
616.5 g Glycerin, 3.0 g Imidazol, 1037,6 g Saccharose, sowie 806,2 g Ölsäuremethylester wurden bei 25 °C in einen 6 L-Reaktor vorgelegt. Anschließend wurde dieser mit Stickstoff inertisiert. Der Kessel wurde auf 130 °C erhitzt und es wurden 3505,4 g Propylenoxid zudosiert.

Nach einer Abreaktionszeit von 3 h wurde für 60 Minuten unter vollem Vakuum bei 100 °C evakuiert und anschließend auf 25 °C abgekühlt.

Der erhaltene Fettsäuremodifizierte Polyetheralkohol besaß eine OH-Zahl von 415 mg KOH/g.
Polyetherol 2: Polyetheralkohol mit einer Hydroxylzahl von 750 mg KOH/g und einer Funktionalität von 4.0, basierend auf Propylenoxid und Ethylendiamin als Starter
Polyetherol 3: Polyetheralkohol mit einer Hydroxylzahl von 490 mg KOH/g und einer mittleren Funktionalität von 4.3, basierend auf Propylenoxid und einer Mischung aus Saccharose und Glycerin als Starter.
Polyetherol 4: Polyetheralkohol mit einer Hydroxylzahl von 400 mg KOH/g und einer Funktionalität von 3.0, basierend auf Propylenoxid und Glycerin als Starter
Polyetherol 5: Polyetheralkohol mit einer Hydroxylzahl von 430 mg KOH/g und einer Funktionalität von 5.9, basierend auf Propylenoxid und einer Mischung aus Saccharose und Glycerin als Starter.

Polyesterol 1: Polios NT 361, ein aliphatischer Polyester der Firma Purinova mit einer Hydroxylzahl von 350 mg KOH/g und einer Funktionalität von 3.1

Polyesterol 2: aromatischer Polyester mit einer Hydroxylzahl von 240 mg KOH/g und einer Funktionalität von 2.0, aufgebaut aus Phtalsäureanhydrid und Diethylenglycol.

Polyesterol 3: Isoexter 3061, ein aromatischer Polyester der Firma Coim, mit einer Hydroxylzahl von 320 mg KOH/g und einer Funktionalität von 2.0.

Polyesterol 4: Terol 925, ein aromatischer Polyester der Firma Huntsman, mit einer Hydroxylzahl von 305 mg KOH/g und einer Funktionalität von 2.45.

TCPP: Tris(2-Chlorisopropyl)phosphat mit einem Chlorgehalt von 32,5 Gew.-% und einem Phosphorgehalt von 9,5 Gew.-%.

Dabco^{®} DC 193: Schaumstabilisator der Firma Evonik

Katalysator A: Trimerisierungskatalysator bestehend aus 40 Gew.-% Kaliumformiat gelöst in 54,0 Gew.-% Monoethylenglycol und 6,0 Gew.-% Leitungswasser.

Katalysator B: Katalysator bestehend aus 23 Gew.-% Bis(2-dimethylaminoethyl)ether und 77 Gew.-% Dipropylenglycol

Lupranat^{®} M50: polymeres Methylendiphenyldiisocyanat (PMDI), mit einer Viskosität von ca. 500 mPa*s bei 25 °C.

Pentan S 80/20: Mischung aus 80 Gew.-% n-Pentan und 20 Gew.-% Isopentan.

Laborverschäumung zum Einstellen identischer Dichten und Abbindezeiten (Gelzeiten)

Aus den oben genannten Einsatzstoffen wurden die in der Tabelle 1 aufgezeigten phasenstabilen Polyolkomponenten hergestellt. Die Polyolkomponenten wurden durch Variation von Leitungswasser und Katalysator B auf identische Abbindezeiten von 40 s ± 1 s und Becherschaumdichten von 42 kg/m³ ± 1 kg/m³ eingestellt. Die Menge an Pentan und Katalysator A wurde so gewählt, dass die fertigen Schäume aller Einstellungen identische Konzentrationen enthielten. Die so eingestellten Polyolkomponenten wurden mit Lupranat^{®} M50 in einem solchen Mischungsverhältnis zur Reaktion gebracht, dass die Kennzahl aller Einstellungen 145 ± 5 betrug.

Auf diese Weise wurde 80 g Reaktionsgemisch in einem Pappbecher umgesetzt, indem die Mischung für 10 Sekunden intensiv mittels eines Labor-Rührers der Firma Vollrath, bei 1500 U/min vermischt wurde.

**Tabelle 1: Polyolkomponenten**

| Beispiel | 1 (E) | 2 (V) | 3 (V) | 4 (V) | 5 (E) | 6 (E) |
|---|---|---|---|---|---|---|
| Polyetherol 1 | 15 | | 15 | 15 | 15 | 22 |
| Polyetherol 2 | 8.2 | 8.2 | 8.2 | 8.2 | 8.2 | |
| Polyetherol 3 | | 6.5 | | | | |
| Polyetherol 4 | | 8.5 | | | | |
| Polyetherol 5 | 12 | 12 | 12 | 12 | 12 | |
| Polyesterol 1 | 30 | 30 | | | | 43,2 |
| Polyesterol 2 | | | 30 | | | |
| Polyesterol 3 | | | | 30 | | |
| Polyesterol 4 | | | | | 30 | |
| TCPP | 32 | 32 | 32 | 32 | 32 | 32 |
| Dabco^{®} DC 193 | 1.8 | 1.8 | 1.8 | 1.8 | 1.8 | 1.8 |
| Wasser | 1 | 1 | 1 | 1 | 1 | 1 |

### Bestimmung der Druckfestigkeiten:

Aus denselben Schaumblöcken wurden zusätzlich 9 Prüfkörper mit den Maßen 50 mm x 50 mm x 50 mm zur Bestimmung der Druckfestigkeit nach DIN EN 844 entnommen. Die Entnahme erfolgte auch hier immer gleich. Von den 9 Prüfkörpern wurden 3 Prüfkörper so gedreht, dass die Prüfung entgegen der Steigrichtung des Schaums stattfand (Top). Von den 9 Prüfkörpern wurden 3 Prüfkörper so gedreht, dass die Prüfung senkrecht zur Steigrichtung des Schaums stattfand (in X-Richtung). Von den 9 Prüfkörpern wurden 3 Prüfkörper so gedreht, dass die Prüfung senkrecht zur Steigrichtung des Schaums stattfand (in Y-Richtung). Aus allen Messergebnissen wurden anschließend ein Mittelwert gebildet, der in Tabelle 2 als "Druckfestigkeit Ø" angegeben ist.

### Kleinbrennertest entsprechend EN-ISO 11925-2

260 g des auf identische Reaktionszeiten und Schaumdichten eingestellten Reaktionsgemisches, wurden in einem Pappbecher mit Hilfe eines Labor-Rührers intensiv bei 1500 U/min für 10 Sekunden verrührt und in eine Kastenform mit den Innenmaßen 15 cm x 25 cm x 22 cm (Länge x Breite x Höhe) überführt. 24 Stunden, nach Aushärtung des Reaktionsgemisches wurde der entstandene Hartschaumblock entformt und an allen Rändern um 3 cm gekürzt. Die mit den Maßen: 190 x 90 x 20 mm entnommenen Prüfkörper wurden anschließend für 24 Stunden bei 20°C und 65 % Luftfeuchtigkeit konditioniert. Aus jedem Hartschaumblock wurden 5 Prüfkörper entnommen und entsprechend DIN EN-ISO 11925-2 mittels Kantenbeflammung an der 90 mm Seite getestet. Der Mittelwert der Flammenhöhen ist als "Ø Flammenhöhe, EN-ISO 11925-2" in Tabelle 2 angegeben.

### Bestimmung der Schaumsprödigkeit

Die Sprödigkeiten der Hartschäume wurden bestimmt, indem die hergestellten Becherschäume 8 Minuten nach dem Vermischen der Reaktionskomponenten an der seitlichen Oberkante mit einer vergleichbaren Kraft eingedrückt wurden. Die Schaumsprödigkeit wurde anhand eines Notensystems entsprechend der nachfolgenden Kriterien bewertet:
1. Keine Sprödigkeit: Beim Eindrücken des Schaums sind kein Schaumrisse sichtbar und keine Knackgeräusche wahrnehmbar
2. Leichte Sprödigkeit: Beim Eindrücken des Schaums sind kein Schaumrisse sichtbar, aber leichte Knackgeräusche wahrnehmbar.
3. Mittlere Sprödigkeit: Beim Eindrücken des Schaums sind feine Schaumrisse sichtbar und es lassen sich deutliche Knackgeräusche wahrnehmen
4. Hohe Sprödigkeit: Beim Eindrücken des Schaums sind deutliche Schaumrisse inkl. Materialabplatzungen sichtbar und es lassen sich deutliche Knackgeräusche wahrnehmen.

### Bestimmung der Schaumoberflächenqualität:

Zur Beurteilung der Schaumoberflächenqualität wurde ein durchsichtiger, flach aufgerollter TPU-Schlauch, der im flachen Zustand eine Breite von 7,0 cm und im geöffneten Zustand einen Durchmesser von 4.5 cm aufweist, mit Reaktionsmaterial befüllt. Zur Befüllung mit Reaktionsmaterial wurde ca. 100 cm des Schlauchs von einem Coil abgewickelt und dass offene Ende an einem Stativ, ca. 30 cm oberhalb des Labortisches befestigt. Ein Weithalstrichter im offenen, oberen Ende der Schlauchöffnung diente zur einfacheren Befüllung mit dem Reaktionsmaterial. Ein Kabelbinder kurz unterhalb des Trichters ermöglichte ein luftdichtes Verschließen des Schlauchs unmittelbar nach der Befüllung mit dem Reaktionsmaterial. Zur Messung wurde 100 g des auf identische Reaktionszeiten und Schaumdichten eingestellten Reaktionsgemisches, in einem Pappbecher für 7 Sekunden intensiv bei 1500 U/min vermischt und direkt im Anschluss für 10 Sekunden in den Schlauch umgestürzt. Anschließend wurde die noch offene Seite des Schlauchs sofort mit dem Kabelbinder verschlossen, so dass der expandierende Schaum gezwungen wurde, durch den flachen Schlauch in Richtung des Coils zu fließen. Direkt nach dem Umstürzen des Reaktionsmaterials in den Schlauch wurde der Becher mit dem restlichen Reaktionsgemisch zurückgewogen, um die genaue Menge an Reaktionsmaterial zu ermitteln, die sich im Schlauch befindet. Zur Auswertung der Schaumoberflächenqualitäten wurden nur Schläuche mit einer Menge an Reaktionsgemisch von 65 g +/- 5 g verwendet. Nach vollständiger Expansion und Aushärtung des Schaums wurde der Schlauch gleichmäßig an beiden Seiten so gekürzt, so dass ein 15 cm Stück direkt aus der Schlauchmitte entnommen wurde. Das erhaltene Schaummittelstück wurde der Länge nach halbiert und die beiden Hälften wurden zur Beurteilung der Oberflächenqualität und zur Messung der Zellgrößen herangezogen.

Zur Bewertung der Oberfläche wurde mittels eines Computerprogramms die Lunkerfläche im Verhältniss zu der Gesamtfläche ausgerechnet und die Oberflächenqualität anhand des nachfolgenden Notensystems beurteilt:
1: Sehr guter Oberflächenqualität (Lunkerfläche beträgt 1 % - 1,5 % der Gesamtfläche)
2: Gute Oberflächenqualität (Lunkerfläche beträgt 1,5 % - 2,0 % der Gesamtfläche)
3: Mittlere Oberflächenqualität (Lunkerfläche beträgt 2,0 - 2,5 % der Gesamtfläche)
4: Schlechte Oberflächenqualität (Lunkerfläche beträgt 2,5 - 3,0 % der Gesamtfläche)
5: Sehr Schlechte Oberflächenqualität (Lunkerfläche beträgt > 3,0 % der Gesamtfläche)

### Zellgröße

Zur Bestimmung der Zellgröße wurde, von den Schlauchmittelstückhälften, planparallel zur halbierten Schnittfläche, schmale Scheiben abgeschnitten und an der frisch abgeschnittenen Seite vermessen.

Vor Vermessung wurden die Schnittflächen gleichmäßig mit einem Rußspray der Firma "Goldlücke GmbH" besprüht, so dass die transluzenten Schäume mit einer lichtundurchlässigen Schicht bedeckt wurden, wodurch die oberen, angeschnittenen Zellstege gegenüber den darunterliegenden, nicht angeleuchteten Zellinnenräumen unter Ausleuchtung mit einer flachen LED-Ringleuchte, kontrastreich hervortreten.

Die Messung erfolgte anschließend mit einem "Pore!Scan"-Mikroskop der Firma "Goldlücke GmbH" an Lunker-freien Bereichen des kontrastierten Schaums.

Nach Einstellung der Vergrößerung (mit der Zielsetzung zwischen 300 und 500 Zellen pro Bild zu erhalten) und Scharfstellung des Mikroskops, wurde die Messung durchgeführt. Eine Computersoftware berechnet automatisch für jedes Bild die Zellenanzahl sowie die Zelldurchmesser. Diese Messung wurde pro Schlauchmittelstück jeweils an 5 verschiedenen Stellen durchgeführt. Anschließend wurde aus den 5 Messungen eine mittlere Zelldurchmesserverteilung erstellt. Die in Tabelle 2 angegebenen "Ø Zellgröße" beschreibt die Summe aller gemessenen Zelldurchmesser geteilt durch die Anzahl an gemessenen Zellen.

**Tabelle 2: Schaumeigenschaften**

| Beispiel | 1 (E) | 2 (V) | 3 (V) | 4 (V) | 5 (E) | 6 (E) |
|---|---|---|---|---|---|---|
| | | | | | | |
| Schaumsprödigkeit [1 - 4] | 1 | 1 | 3 | 3 | 1 | 1 |
| | | | | | | |
| Druckfestigkeit Ø [MPa] | 0.20 | 0.18 | 0.20 | 0.20 | 0,19 | 0,19 |
| | | | | | | |
| Schaumoberflächenqualität [1 - 6] | 1 | 5 | 4 | 4 | 2 | 2 |
| Ø Zellgröße [µm] | 280 | 308 | 327 | 335 | 290 | 291 |
| | | | | | | |
| Ø Flammenhöhe, DIN EN-ISO 11925-2 [cm] | 14.4 | 15.3 | 15.0 | 15.8 | 11.1 | 10.5 |

Die Kombination der Polyetherpolyole 3 und 4 in Vergleichsbeispiel 2 führt im Mittel zu einer identischen Funktionalität und OH-Zahl wie beim Polyetherpolyol 1 aus Beispiel 1, Beispiel 5 und Beispiel 6. Überraschenderweise zeigte sich, dass die Schäume aus Vergleichsbeispiel 2 eine deutlich schlechtere Schaumoberfläche aufweisen, als die Schäume aus Beispiel 1, Beispiel 5 und Beispiel 6. In der Zellgrößenmessung ergibt sich ebenfalls ein größerer Zelldurchmesser, welcher sich erfahrungsgemäß zusammen mit der schlechteren Schaumoberfläche negativ auf die thermische Isolationswirkung der Schäume auswirkt. Zusätzlich führen die Schäume aus Vergleichsbeispiel 2 überraschenderweise zu deutlich höheren Flammenspitzen im Test nach DIN EN ISO 11925-2, wodurch dieser nicht bestanden wird, da die mittlere Flammenhöhe die 15 cm Marke übersteigt. Im Vergleich zu den Schäumen aus Beispiel 1, Beispiel 5 und Beispiel 6 weisen die Schäume aus Vergleichsbeispiel 2 zudem eine niedrigere Druckfestigkeit auf.

Der Austausch der vernetzenden Polyesterpolyole (Polyesterol 1 und Polyesterol 4) durch Polyesterol 2 (Vergleichsbeispiel 3) und Polyesterol 3 (Vergleichsbeispiel 4), mit einer geringeren OH-Zahl und/oder Funktionalität, führt überraschenderweise trotz identischer Kennzahl der hergestellten Schäume zu einer deutlich schlechteren Brandfestigkeit und bewirkt ebenfalls ein nicht Bestehen des Test nach DIN EN-ISO 11925-2. Weiterhin weisen die Schäume aus Vergleichsbeispiel 3 und Vergleichsbeispiel 4 im Vergleich zu den Schäumen aus Beispiel 1, Beispiel 5 und Beispiel 6 eine schlechtere Oberflächenqualität und eine erhöhte mittlere Zellgröße auf.

Zudem weisen die Schäume aus Vergleichsbeispiel 3 und Vergleichsbeispiel 4 im Vergleich zu den Schäumen aus Beispiel 1, Beispiel 5 und Beispiel 6 eine erhöhte Schaumsprödigkeit auf.

Die erhöhte Sprödigkeit an der Oberfläche ist nachteilig, da sie erfahrungsgemäß zu schlechteren Schaumhaftungen an Deckschichtmaterialien führt.

Nur mittels der in Beispiel 1, Beispiel 5 und Beispiel 6 beschriebenen Kombination der Einsatzstoffe lassen sich Reaktionsmischungen herstellen, die allen Anforderungen gerecht werden.

## Patentansprüche

1. Verfahren zur Herstellung von Polyurethan-Hartschaumstoffen, bei dem man
a) Polyisocyanate mit
b) Verbindungen mit mindestens zwei mit Isocyanatgruppen reaktiven Wasserstoffatomen,
c) gegebenenfalls Flammschutzmittel,
d) Treibmittel,
e) Katalysator und
f) gegebenenfalls Hilfs- und Zusatzstoffe
zu einer Reaktionsmischung vermischt und zum Polyurethan-Hartschaumstoff aushärtet,
wobei die Komponente (b)
(b1) mindestens ein Polyetherpolyol, hergestellt durch Umsetzung von
(b11) 15 bis 40 Gew.-%, bezogen auf das Gesamtgewicht des Polyetherpolyols (b1), eines oder mehrerer Polyole oder Polyamine mit einer mittleren Funktionalität von 2,5 bis 8,
(b12) 2 bis 30 Gew.-%, bezogen auf das Gesamtgewicht des Polyetherpolyols (b1), einer oder mehrerer Fettsäuren und/oder Fettsäuremonoester und
(b13) 35 bis 70 Gew.-%, bezogen auf das Gesamtgewicht des Polyetherpolyols (b1), Propylenoxid
und
(b2) zu mindestens 20 Gew.-%, bezogen auf das Gesamtgewicht der Komponente (b), ein Polyesterpolyol mit einer mittleren Funktionalität ≥ 2,4 und einer OH-Zahl ≥ 280 mg KOH/g, und gegebenenfalls
(b3) ein oder mehrere amingestartete Polyetherpolyole,
(b4) ein oder mehrere hochfunktionelle Polyetherpolyole mit einer mittleren Funktionalität mindestens 5,0 sowie
(b5) ein oder mehrere Kettenverlängerungsmittel und/oder Vernetzungsmittel enthält, und
in der Komponente (b) neben den Komponenten (b1) bis (b5) weniger als 20 Gew.-%, bezogen auf das Gesamtgewicht der Komponente (b), weitere Verbindungen mit mindestens zwei mit Isocyanatgruppen reaktiven Wasserstoffatomen enthalten sind.

2. Verfahren nach Anspruch 1, **dadurch gekennzeichnet, dass** zur Herstellung von Polyetherpolyol (b1) ein Gemisch aus Glycerin und Saccharose als Polyol (b11) verwendet wird.

3. Verfahren nach Anspruch 1 oder 2, **dadurch gekennzeichnet, dass** das Polyesterpolyol (b2) mindestens ein aromatisches Polyesterpolyol (b2a) mit einer Funktionalität von 2,4 bis 3,0 und einer OH-Zahl von 280 bis 330 mg KOH/g aufweist.

4. Verfahren nach einem der Ansprüche 1 oder 2, **dadurch gekennzeichnet, dass** das Polyesterpolyol (b2) mindestens ein aliphatisches Polyesterpolyol (b2b) mit einer Funktionalität von größer 2,8 bis 3,4 und einer OH-Zahl von 300 bis 400 mg KOH/g aufweist.

5. Verfahren nach einem der Ansprüche 1 bis 4, **dadurch gekennzeichnet, dass** das Polyesterpolyol (b2) bezogen auf sein Gesamtgewicht ≤ 5 Gew.-% Fettsäurereste enthält.

6. Verfahren nach einem der Ansprüche 1 bis 5, **dadurch gekennzeichnet, dass** Komponente (b) mindestens ein Polyetherpolyol (b3), hergestellt durch Alkoxylierung von Ethylendiamin, Toluylendiamin oder Mischungen davon, enthält.

7. Verfahren nach einem der Ansprüche 1 bis 6, **dadurch gekennzeichnet, dass** Komponente (b) mindestens ein Polyetherpolyol (b4) mit einer mittleren Funktionalität ≥ 5,0 und einer OH-Zahl ≥ 400 mg KOH/g enthält.

8. Verfahren nach einem der Ansprüche 1 bis 7, **dadurch gekennzeichnet, dass** die Komponente (b) 10 bis 40 Gew.-% Polyetherpolyol (b1), 20 bis 65 Gew.-% Polyesterpolyol (b2), 0 bis 20 Gew.-% amingestartetes Polyetherpolyol (b3) und 0 bis 30 Gew.-% Polyetherpolyol (b4), jeweils bezogen auf das Gesamtgewicht der Komponente (b), enthält

9. Verfahren nach einem der Ansprüche 1 bis 8, **dadurch gekennzeichnet, dass** der Isocyanatindex 100 bis 160 beträgt.

10. Verfahren nach einem der Ansprüche 1 bis 9, **dadurch gekennzeichnet, dass** das Treibmittel (d) mindestens einen aliphatischen oder cycloaliphatischen Kohlenwasserstoff mit 4 bis 8 Kohlenstoffatomen enthält.

11. Verfahren nach einem der Ansprüche 1 bis 10, **dadurch gekennzeichnet, dass** der Katalysator (e) ein Katalysatorgemisch ist, enthaltend tertiäres Amin und Metall- oder Ammoniumcarboxylat.

12. Verfahren nach einem der Ansprüche 1 bis 11, **dadurch gekennzeichnet, dass** die Flammschutzmittel (c) ein phosphorhaltiges Flammschutzmittel umfassen und der Gehalt an Phosphor, bezogen auf das Gesamtgewicht der Komponenten (a) bis (f), 0,9 bis 1,5 Gew.-% beträgt.

13. Verfahren nach einem der Ansprüche 1 bis 12, **dadurch gekennzeichnet, dass** das Verfahren ein Verfahren zur Herstellung von Sandwichelementen ist und in einem Doppelband durchgeführt wird.

14. Polyurethan-Hartschaumstoff, erhältlich nach einem Verfahren gemäß einem der Ansprüche 1 bis 13.

15. Polyolkomponente zur Herstellung eines Polyurethan-Hartschaumstoffs, enthaltend (b) Verbindungen mit mindestens zwei mit Isocyanatgruppen reaktiven Wasserstoffatomen, (c) gegebenenfalls Flammschutzmittel (d) gegebenenfalls Treibmittel, (e) Katalysator und (f) gegebenenfalls Hilfs- und Zusatzstoffe,
wobei die Komponente (b) mindestens ein Polyetherpolyol (b1) und ein aromatisches Polyesterpolyol (b2) enthält und das Polyetherpolyol (b1) herstellbar ist durch Umsetzung von
15 bis 40 Gew.-%, bezogen auf das Gesamtgewicht des Polyetherpolyols (b1), eines oder mehrerer Polyole oder Polyamine (b11) mit einer mittleren Funktionalität von 2,5 bis 8,
2 bis 30 Gew.-%, bezogen auf das Gesamtgewicht des Polyetherpolyols (b1), einer oder mehrerer Fettsäuren und/oder Fettsäuremonoester (b12) und
35 bis 70 Gew.-%, bezogen auf das Gesamtgewicht des Polyetherpolyols (b1), Propylenoxid (b13)
und wobei die Komponente (b) mindestens 20 Gew.-%, bezogen auf das Gesamtgewicht der Komponente (b), Polyesterpolyol (b2) mit einer mittleren Funktionalität von 2,4 oder größer und einer OH-Zahl von 280 mg KOH/g oder mehr enthält und wobei die Komponente (b) gegebenenfalls
(b3) amingestartete Polyetherpolyole,
(b4) hochfunktionelle Polyetherpolyole mit einer mittleren Funktionalität mindestens 5,0 sowie
(b5) Kettenverlängerungsmitten und Vernetzungsmittel enthält, und
in der Komponente (b) neben den Komponenten (b1) bis (b5) weniger als 20 Gew.-%, bezogen auf das Gesamtgewicht der Komponente (b), weitere Verbindungen mit mindestens zwei mit Isocyanatgruppen reaktiven Wasserstoffatomen enthalten sind.

## Claims

1. A process for producing rigid polyurethane foams, in which
a) polyisocyanates are mixed with
b) compounds having at least two
hydrogen atoms reactive toward isocyanate groups,
c) optionally flame retardants,
d) blowing agent,
e) catalyst, and
f) optionally auxiliaries and additives
to give a reaction mixture and cured to form a rigid polyurethane foam,
wherein the component (b) comprises
(b1) at least one polyether polyol prepared by reaction of
(b11) 15% to 40% by weight, based on the total weight of the polyether polyol (b1), of one or more polyols or polyamines having an average functionality of 2.5 to 8, (b12) 2% to 30% by weight, based on the total weight of the polyether polyol (b1), of one or more fatty acids and/or fatty acid monoesters, and
(b13) 35% to 70% by weight, based on the total weight of the polyether polyol (b1), of propylene oxide
and
(b2) at least 20% by weight, based on the total weight of component (b), of a polyester polyol having an average functionality of ≥ 2.4 and an OH value of ≥ 280 mg KOH/g and optionally
(b3) one or more amine-started polyether polyols,
(b4) one or more highly functional polyether polyols having an average functionality of at least 5.0, and (b5) one or more chain extenders and/or crosslinkers and
component (b) in addition to components (b1) to (b5) comprises less than 20% by weight, based on the total weight of component (b), of further compounds having at least two hydrogen atoms reactive toward isocyanate groups.

2. The process as claimed in claim 1, wherein, for the production of polyether polyol (b1), a mixture of glycerol and sucrose is used as polyol (b11).

3. The process as claimed in claim 1 or 2, wherein the polyester polyol (b2) includes at least one aromatic polyester polyol (b2a) having a functionality of 2.4 to 3.0 and an OH value of 280 to 330 mg KOH/g.

4. The process as claimed in either of claims 1 or 2, wherein the polyester polyol (b2) includes at least one aliphatic polyester polyol (b2b) having a functionality of greater than 2.8 to 3.4 and an OH value of 300 to 400 mg KOH/g.

5. The process as claimed in any of claims 1 to 4, wherein the polyester polyol (b2), based on the total weight thereof, comprises ≤ 5% by weight of fatty acid moieties.

6. The process as claimed in any of claims 1 to 5, wherein component (b) comprises at least one polyether polyol (b3) prepared by alkoxylation of ethylenediamine, tolylenediamine or mixtures thereof.

7. The process as claimed in any of claims 1 to 6, wherein component (b) comprises at least one polyether polyol (b4) having an average functionality of ≥ 5.0 and an OH value of ≥ 400 mg KOH/g.

8. The process as claimed in any of claims 1 to 7, wherein component (b) comprises 10% to 40% by weight of polyether polyol (b1), 20% to 65% by weight of polyester polyol (b2), 0% to 20% by weight of amine-started polyether polyol (b3), and 0% to 30% by weight of polyether polyol (b4), in each case based on the total weight of component (b).

9. The process as claimed in any of claims 1 to 8, wherein the isocyanate index is 100 to 160.

10. The process as claimed in any of claims 1 to 9, wherein the blowing agent (d) comprises at least one aliphatic or cycloaliphatic hydrocarbon having from 4 to 8 carbon atoms.

11. The process as claimed in any of claims 1 to 10, wherein the catalyst (e) is a catalyst mixture comprising tertiary amine and metal carboxylate or ammonium carboxylate.

12. The process as claimed in any of claims 1 to 11, wherein the flame retardants (c) comprise a phosphorus-containing flame retardant and that the content of phosphorus, based on the total weight of the components (a) to (f), is 0.9% to 1.5% by weight.

13. The process as claimed in any of claims 1 to 12, wherein the process is a process for producing sandwich elements and is carried out in a double belt.

14. A rigid polyurethane foam obtainable by a process as claimed in any of claims 1 to 13.

15. A polyol component for producing a rigid polyurethane foam comprising (b) compounds having at least two hydrogen atoms reactive toward isocyanate groups, (c) optionally flame retardant, (d) optionally blowing agent, (e) catalyst, and (f) optionally auxiliaries and additives,
wherein component (b) comprises at least one polyether polyol (b1) and an aromatic polyester polyol (b2) and the polyether polyol (b1) can be produced by reacting
15% to 40% by weight, based on the total weight of the polyether polyol (b1), of one or more polyols or polyamines (b11) having an average functionality of 2.5 to 8,
2% to 30% by weight, based on the total weight of the polyether polyol (b1), of one or more fatty acids and/or fatty acid monoesters (b12), and
35% to 70% by weight, based on the total weight of the polyether polyol (b1), of propylene oxide (b13)
and wherein component (b) comprises at least 20% by weight, based on the total weight of component (b), of polyester polyol (b2) having an average functionality of 2.4 or greater and an OH value of 280 mg KOH/g or more and wherein component (b) optionally comprises
(b3) amine-started polyether polyols,
(b4) highly functional polyether polyols having an average functionality of at least 5.0, and
(b5) chain extenders and crosslinkers,
and
component (b) in addition to components (b1) to (b5) comprises less than 20% by weight, based on the total weight of component (b), of further compounds having at least two hydrogen atoms reactive toward isocyanate groups.

## Revendications

1. Procédé de préparation de mousses dures de polyuréthane, dans lequel on mélange
a) des polyisocyanates avec
b) des composés présentant au moins deux atomes d'hydrogène réactifs vis-à-vis des groupes isocyanate ,
c) le cas échéant des agents ignifuges
d) des agents gonflants
e) un catalyseur et
f) le cas échéant des adjuvants et des additifs
en un mélange réactionnel et on le durcit en mousse dure de polyuréthane,
le composant (b) contenant
(b1) au moins un polyétherpolyol préparé par mise en réaction de
(b11) 15 à 40 % en poids, par rapport au poids total du polyétherpolyol (b1), d'un(e) ou de plusieurs polyols ou polyamines présentant une fonctionnalité moyenne de 2,5 à 8,
(b12) 2 à 30 % en poids, par rapport au poids total du polyétherpolyol (b1), d'un ou de plusieurs acides gras et/ou monoesters d'acides gras, et
(b13) 35 à 70 % en poids, par rapport au poids total du polyétherpolyol (b1), d'oxyde de propylène
et
(b2) à raison d'au moins 20 % en poids, par rapport au poids total du composant (b), d'un polyesterpolyol présentant une fonctionnalité moyenne ≥ 2,4 et un indice OH ≥ 280 mg de KOH/g et le cas échéant
(b3) un ou plusieurs polyétherpolyols initiés par amine, (b4) un ou plusieurs polyétherpolyols hautement fonctionnels, présentant une fonctionnalité moyenne d'au moins 5,0 ainsi que
(b5) un ou plusieurs agents d'allongement de chaîne et/ou réticulants,
et
le composant (b) comprenant, outre les composants (b1) à (b5), moins de 20 % en poids, par rapport au poids total du composant (b), d'autres composés présentant au moins deux atomes d'hydrogène réactifs vis-à-vis des groupes isocyanate.

2. Procédé selon la revendication 1, **caractérisé en ce qu'**on utilise, pour la préparation du polyétherpolyol (b1), un mélange de glycérol et de saccharose en tant que polyol (b11).

3. Procédé selon la revendication 1 ou 2, **caractérisé en ce que** le polyesterpolyol (b2) présente au moins un polyesterpolyol aromatique (b2a) présentant une fonctionnalité de 2,4 à 3,0 et un indice OH de 280 à 330 mg de KOH/g.

4. Procédé selon l'une des revendications 1 ou 2, **caractérisé en ce que** le polyesterpolyol (b2) présente au moins un polyesterpolyol aliphatique (b2b) présentant une fonctionnalité de plus de 2,8 jusqu'à 3, 4 et un indice OH de 300 à 400 mg de KOH/g.

5. Procédé selon l'une des revendications 1 à 4, **caractérisé en ce que** le polyesterpolyol (b2) contient ≤ 5 % en poids de résidus d'acides gras, par rapport à son poids total.

6. Procédé selon l'une des revendications 1 à 5, **caractérisé en ce que** le composant (b) contient au moins un polyétherpolyol (b3), préparé par alcoxylation d'éthylènediamine, de toluylènediamine ou de leurs mélanges.

7. Procédé selon l'une des revendications 1 à 6, **caractérisé en ce que** le composant (b) contient au moins un polyétherpolyol (b4) présentant une fonctionnalité moyenne ≥ 5, 0 et un indice OH ≥ 400 mg de KOH/g.

8. Procédé selon l'une des revendications 1 à 7, **caractérisé en ce que** le composant (b) contient 10 à 40 % en poids de polyétherpolyol (b1), 20 à 65 % en poids de polyétherpolyol (b2), 0 à 20 % en poids de polyétherpolyol initié par amine (b3) et 0 à 30 % en poids de polyétherpolyol (b4), à chaque fois par rapport au poids total du composant (b).

9. Procédé selon l'une des revendications 1 à 8, **caractérisé en ce que** l'indice d'isocyanate est de 100 à 160.

10. Procédé selon l'une des revendications 1 à 9, **caractérisé en ce que** l'agent gonflant (f) contient au moins un hydrocarbure aliphatique ou cycloaliphatique comprenant 4 à 8 atomes de carbone.

11. Procédé selon l'une des revendications 1 à 10, **caractérisé en ce que** le catalyseur (e) est un mélange catalytique contenant une amine tertiaire et un carboxylate métallique ou d'ammonium.

12. Procédé selon l'une des revendications 1 à 11, **caractérisé en ce que** les agents ignifuges (c) comprennent un agent ignifuge contenant du phosphore et la teneur en phosphore, par rapport au poids total des composants (a) à (f), est de 0,9 à 1,5 % en poids.

13. Procédé selon l'une des revendications 1 à 12, **caractérisé en ce que** le procédé est un procédé de fabrication d'éléments sandwich et est réalisé dans une double bande.

14. Mousse dure de polyuréthane, pouvant être obtenue par un procédé selon l'une des revendications 1 à 13.

15. Composant polyol pour la préparation d'une mousse dure de polyuréthane contenant (b) des composés présentant au moins deux atomes d'hydrogène réactifs vis-à-vis des groupes isocyanate, (c) le cas échéant des agents ignifuges, (d) le cas échéant des agents gonflants, (e) un catalyseur et (f) le cas échéant des adjuvants et des additifs,
le composant (b) contenant au moins un polyétherpolyol (b1) et un polyesterpolyol aromatique (b2) et le polyétherpolyol (b1) pouvant être préparé par mise en réaction de :
15 à 40 % en poids, par rapport au poids total du polyétherpolyol (b1), d'un(e) ou de plusieurs polyols ou polyamines (b11) présentant une fonctionnalité moyenne de 2,5 à 8,
2 à 30 % en poids, par rapport au poids total du polyétherpolyol (b1), d'un ou de plusieurs acides gras et/ou monoesters d'acides gras (b12),
35 à 70 % en poids, par rapport au poids total du polyétherpolyol (b1), d'oxyde de propylène (b13)
et le composant (b) contenant au moins 20 % en poids, par rapport au poids total du composant (b), de polyesterpolyol (b2) présentant une fonctionnalité moyenne de 2,4 ou plus et un indice OH de 280 mg de KOH/g ou plus
et le composant (b) contenant le cas échéant
(b3) des polyétherpolyols initiés par amine,
(b4) des polyétherpolyols hautement fonctionnels présentant une fonctionnalité moyenne d'au moins 5, 0 ainsi que
(b5) des agents d'allongement de chaîne et des réticulants
et
le composant (b) comprenant, outre les composants (b1) à (b5), moins de 20 % en poids, par rapport au poids total du composant (b), d'autres composés présentant au moins deux atomes d'hydrogène réactifs vis-à-vis des groupes isocyanate.
